# EUROPÄISCHE PATENTSCHRIFT

(11) **EP 1 030 897 B1**
(45) Veröffentlichungstag und Bekanntmachung des Hinweises auf die Patenterteilung: **05.06.2002**
(21) Anmeldenummer: 98956900.9
(22) Anmeldetag: 31.10.1998
(51) Int. Cl.: C09J 133/08, C09D 133/08, C09D 5/34, C09K 3/10, C08K 5/101, C08K 5/09, C08K 5/15

(54) **POLYACRYLAT-FUGENDICHTUNGSMASSE**
POLYACRYLATE JOINT SEALANTS
PATE D'ETANCHEITE POUR JOINTS EN POLYACRYLATE

(30) Priorität: 07.11.1997 DE 19749101
(43) Veröffentlichungstag der Anmeldung: 30.08.2000
(73) Patentinhaber: Henkel Kommanditgesellschaft auf Aktien, 40589 Düsseldorf (DE)
(72) Erfinder: LOTH, Helmut, D-45131 Essen (DE); HELPENSTEIN, Klaus, D-41199 Mönchengladbach (DE); KLAUCK, Wolfgang, D-40670 Meerbusch (DE); KLEIN, Johann, D-40593 Düsseldorf (DE); DUHM, Lydia, D-40593 Düsseldorf (DE)
(86) Internationale Anmeldenummer: EP9806907
(87) Internationale Veröffentlichungsnummer: WO9924522

(56) Entgegenhaltungen:
- EP-A- 0 038 295
- WO-A-96/06897
- WO-A-97/07173

## Beschreibung

Die Erfindung betrifft eine Polyacrylat-Fugendichtungsmasse auf der Basis eines Polyacrylates als Bindemittel, eines Fettstoffes als Weichmacher, üblicher Füllstoffe und Hilfsmitteln sowie deren Herstellung und Verwendung.

Derartige Polyacrylat-Fugendichtungsmassen sind bekannt. So wird in der WO 97/07173 eine Fugendichtungsmasse aus einem Butylacrylat/Styrol-Copolymeren, Epoxystearinsäuremethylester, Kreide, TiO₂, Ammoniak, Netzmittel und Wasser beschrieben (siehe Seite 26). Das Rückstellvermögen beträgt 22 %, wenn man den Prüfkörper um 100 % dehnt und nach 24 Stunden bei Raumtemperatur eine Stunde entspannen läßt. Der E-100-Modul (= Dehn-/Spannungs-Wert bei 100 % Dehnung) beträgt bei Anwendung auf Beton 0,04, auf Holz 0,05, auf PVC 0,015 und auf Aluminium 0,06 N/mm².
In der WO 96/06897 wird eine Zusammensetzung aus einem Homo-Polybutylacrylat und einem Epoxystearinsäuremethylester beschrieben (siehe Seite 21, Beispiel 4). Derartige Zusammensetzungen eignen sich insbesondere zur Herstellung von pastenförmigen Dichtstoffen wie Fugendichtungsmassen (siehe Seite 13, letzter Absatz).

Derartige Zusammensetzungen sind zwar als Fugendichtungsmasse mit einem niedrigen Anforderungsprofil zu gebrauchen, jedoch nicht als eine plastoelastische oder gar eine elastische Fugendichtungsmassen anzusehen. Dazu ist folgende Voraussetzung notwendig:
Das Rückstellvermögen muß mehr als 40 bzw. mehr als 70 % betragen, entsprechend dem IVD-Merkblatt Nr. 2. Die Messung erfolgt nach der Norm ISO 7389, Methode B, bzw. der DIN 52458.

Die erfindungsgemäße Aufgabe besteht darin, hochwertige Fugendichtungsmassen zu finden, die sich nicht nur durch eine hohe Elastizität, sondern auch durch eine universelle Haftung ohne Primer auf den am Bau üblichen Untergründen auszeichnen. Bestimmungsgemäß müssen solche Fugendichtstoffe für den Einsatz im Außenbereich UV - und witterungsstabil sein.

Die erfindungsgemäße Lösung ist den Patentansprüchen zu entnehmen. Sie besteht im wesentlichen aus einer pastösen Masse, die folgende Komponenten enthält:
A) 10 bis 60 Gew.-% eines Acrylat/Acrylnitril-Copolymeren mit einem Anteil an Acrylnitril im Bereich von 2 bis 15 und an Acrylat im Bereich von 85 bis 98 Gew.-% und mit 2 bis 8 C-Atomen in der Alkoholkomponente als Bindemittel,
B) 0,2 bis 15 Gew.-% an den Fettstoffen Fettsäuren, Fettalkohole und deren Derivate mit einem Molekulargewicht von größer als 100 als Weichmacher,
C) 0 bis 70 Gew.-% an Füllstoffen und Pigmenten,
D) 0,3 bis 5 Gew.-% an Hilfsstoffen und
E) 5 bis 20 Gew.-% an Wasser.

Die Fugendichtmasse ist dann pastös, wenn die Extrusionsrate höchstens 6000g/min beträgt und zweckmäßigerweise zwischen 500 g/min bis 4000 g/min liegt. Die Meßtemperatur beträgt 23 °C. Die Meßmethode erfolgt nach der Norm ISO 9048.

Unter einem "Acrylat/Acrylnitril-Copolymeren" sind Copolymere zu verstehen, die zumindest ein Acrylat und Acrylnitril als Comonomere enthalten. Der Anteil an Acrylnitril liegt im Bereich von 2 bis 15, insbesondere von 4 bis 8 Gew.-%. Der Anteil an Acrylat liegt im Bereich von 85 bis 98, insbesondere von 90 bis 98 Gew. Die einzelnen Comonomeren sind vorzugsweise blockartig in der Hauptkette verteilt. Bevorzugtes Acrylat ist das Butylacrylat. Anstelle von Butylacrylat können auch andere Ester der Acrylsäure eingesetzt werden, wenn ihre Alkoholkomponente 2 bis 8, vorzugsweise 2 bis 4 C-Atome enthält.

Das Acrylat/Acrylnitril-Copolymer kann noch weitere Comonomere in geringen Mengen enthalten, um spezielle Effekte zu erzielen. Zur Haftverbesserung eignen sich z.B. olefinisch ungesättigte, hydrolysierbare Siliciumverbindungen wie z.B.

Vinyltrialkoxysilan, wobei als Alkoxygruppe Reste wie Methoxy, Ethoxy, Methoxyethylen, Ethoxyethylen, Methoxypropylenglykolether bzw. Ethoxypropylenglykolether dienen. Zur Steuerung der Fließgrenze können gegebenenfalls Regulatoren eingesetzt werden, z.B. wasserlösliche Monomere wie Acrylsäure, Methacrylsäure, Acrylamid, Methacrylamid, N-Methylolacrylamid bzw. -methacrylamid.
In den Dispersionen dürfen nicht Monomere enthalten sein, die geeignet sind, eine chemische Vernetzung herbeizuführen, sei es innerhalb der Dispersion selbst oder durch Hinzufügen von weiteren Hilfsstoffen wie z.B. die Kombination von einpolymerisierten Carboxylgruppen in Verbindung mit einem wasserlöslichen Zinktetraminkomplex oder ein einpolymerisiertes, hydrolysierbares Monomer wie Glycidylacrylat bzw. -methacrylat.

Die geeigneten Acrylat/Acrylnitril-Copolymere werden vorzugsweise durch Emulsionspolymerisation hergestellt.
Der Anteil an Acrylat/Acrylnitril-Copolymeren in der Fugendichtungsmasse liegt im Bereich von 10 bis 60, insbesondere von 15 bis 60 Gew.-%, bezogen auf die Fugendichtungsmasse insgesamt.

Unter "Fettstoffen" sind Fettsäuren, Fettalkohole und deren Derivate zu verstehen, und zwar mit einem Molekulargewicht größer als 100, insbesondere größer als 200. Die obere Grenze ist 20 000, vorzugsweise 300 bis 1 500. Die Fettstoffe werden in Mengen von 0,2 bis 15, vorzugsweise von 1 bis 10 Gew.-% eingesetzt.

Unter "Fettsäuren" werden Säuren verstanden, die eine oder mehrere Carboxyl-Gruppen (-COOH) enthalten. Die Carboxyl-Gruppen können mit gesättigten, ungesättigten, unverzweigten oder verzweigten Alkyl-Resten mit mehr als 8, inbesondere mehr als 12 C-Atomen verbunden sein. Sie können neben -OH, -SH, -C = C-, -COOH, Amino.-, Säureanhydrid-Gruppen oder Epoxidgruppen weitere Gruppen wie Ether-, Ester-, Halogen-, Amid-, Amino-, Urethan- und Hamstoffgruppen enthalten. Bevorzugt werden jedoch Carbonsäuren wie native Fettsäuren oder Fettsäuregemische, Dimerfettsäuren und Trimerfettsäuren.

Konkrete Beispiele für die Fettsäuren sind neben den gesättigten insbesondere die ein- oder mehrfach ungesättigten Säuren Palmitolein-, Öl-, Elaidin-, Petroselin-, Eruca-, Rincinol-, Hydroxymethoxystearin-, 12-Hydroxystearin-, Linol-, Linolen- und Gadoleinsäure.

Als Fettsäuren könen auch verwendet werden Produkte, die aus der Guerbetisierung von linearen gesättigten oder ungesättigten Fettalkoholen mit anschließender Oxidation resultieren. Als Beispiele seien genannt: 2-Ethylhexansäure, 2-Butyloctansäure, 2-Hexyldecansäure, 2-Decyltetradecansäure, 2-Tetradecyloctadecansäure, 2-Hexadecyl-C₂₀-säure oder Gemische davon.
Außerdem kommt auch Isostearinsäure als Nebenprodukt der Dimerisierung von Fettsäuren in Frage.

Neben den in der Natur vorkommenden Fettsäuren können auch Polyhydroxyfettsäuren eingesetzt werden. Diese können z.B. durch Epoxidation ungesättigter Fette und Öle oder Ester von Fettsäuren mit Alkoholen, Ringöffnung mit H-aktiven Verbindungen wie z.B. Alkoholen, Aminen und Carbonsäuren und anschließende Verseifung hergestellt werden. Die als Ausgangsmaterial benötigten Fette oder Öle können sowohl pflanzlichen als auch tierischen Ursprungs sein oder gegebenenfalls gezielt auf petrochemischem Weg synthetisiert werden.

Die Fettsäuren können auch von Öl- und Fett-basierten Rohstoffen abgeleitet sein, wie sie z.B. durch En-Reaktionen, Diels-Alder-Reaktionen, Umesterungen, Kondensationsreaktionen, Pfropfung (z.B. mit Maleinsäureanhydrid oder Acrylsäure usw.) und Epoxidierungen zugänglich sind. Als Beispiele hierfür seinen genannt: a) Epoxide ungesättigter Fettsäuren wie Palmitolein-, Öl-, Elaidin-, Petroselin-, Eruca-, Linol-, Linolen, Gadoleinsäure, b) Umsetzungsprodukte ungesättigter Fettsäuren mit Maleinsäure, Maleinsäureanhydrid, Methacrylsäure oder Acrylsäure, c) Kondensationsprodukte von Hydroxycarbonsäuren wie Ricinolsäöure oder 12-Hydroxystearinsäure und Polyhydroxycarbonsäuren.

Nicht alle der oben beschriebenen Fettsäuren sind bei Raumtemperatur stabil. Falls notwendig, können daher für die erfindungsgemäße Verwendung Derivate der obengenannten Fettsäuren wie Ester oder Amide eingesetzt werden.

In einer bevorzugten Ausführungsform der Erfindung werden Ester oder Partialester der obengenannten Fettsäuren mit ein- oder mehrwertigen Alkoholen verwendet. Unter "Alkoholen" sind Hydroxyl-Derivate von aliphatischen und alicyclischen gesättigten, ungesättigten, unverzweigten oder verzweigten Kohlenwasserstoffen zu verstehen. Hierzu gehören neben einwertigen Alkoholen auch die aus der Polyurethan-Chemie an sich bekannten niedermolekularen Kettenverlängerungsmittel bzw. Vernetzer mit Hydroxylgruppen. Konkrete Beispiele aus dem niedermolekularen Bereich sind Methanol, Ethanol, Propanol, Butanol, Pentanol, Decanol, Octadecanol, 2-Ethylhexanol, 2-Octanol, Ethylenglykol, Propylenglykol, Trimethylenglykol, Tetramethylenglykol, Butylenglykol-2,3, Hexamethylendiol, Octamethylendiol, Neopentylglykol, 1,4-Bishydroxymethylcyclohexan, Guerbetalkohol, 2-Methyl-1,3-Propandiol, Hexantriol-(1,2,6), Glycerin, Trimethylolpropan, Trimethylolethan, Pentaerythrit, Sorbit, Formit, Methylglycosid, Butylenglykol, die zu Alkoholen reduzierten Dimer- und Trimer-Fettsäuren. Von Kollophoniumharzen abgeleitete Alkohole wie Abietylalkohol können ebenfalls für die Veresterung verwendet werden.

Anstelle der obengenannten Alkohole können auch OH-haltige tertiäre Amine, Polyglycerin oder teilweise hydrolysierte Polyvinylester verwendet werden.

Außerdem können zur Oligomerisierung Polycarbonsäuren oder Hydroxycarbonsäuren zugesetzt werden. Beispiele hierfür sind Oxalsäure, Malonsäure, Bernsteinsäure, Maleinsäure, Fumarsäure, Glutarsäure, Adipinsäure, Korksäure, Sebacinsäure, 1,11-Undecandisäure, 1,12-Dodecandisäure, Phthalsäure, Isophthalsäure, Terephthalsäure, Hexahydrophthalsäure, Tetrahydrophthalsäure oder Dimerfettsäure, Trimerfettsäure, Zitronensäure, Milchsäure, Weinsäure, Ricinolsäure, 12-Hydroxystearinsäure. Bevorzugt wird Adipinsäure verwendet.

Beispiele für geeignete Ester sind neben den teilweise verseiften Fetten, wie Glycerinmonostearat, vorzugsweise die natürlichen Fette und Öle von Raps (neu) und (alt), Sonnenblumen, Soja, Lein, Ricinus, Kokosnüssen, Ölpalmen, Ölpalmkernen und Ölbäumen und deren Methylester. Bevorzugte Fette und Öle sind z.B. Rindertalg mit einer Kettenverteilung von 67 % Ölsäure, 2 % Stearinsäure, 1 % Heptadecansäure, 10 % gesättigte Säuren der Kettenlänge C12 bis C16, 12 % Linolsäure und 2 % gesättigte Säuren mit < C18 Kohlenstoffatomen oder z.B. das Öl der neuen Sonnenblume (NSb) mit einer Zusammensetzung von ca. 80 % Ölsäure, 5 % Stearinsäure, 8 % Linolsäure und ca. 7 % Palmitinsäure. Selbstverständlich können z.B. auch die entsprechenden Epoxide und Umsetzungsprodukte mit Maleinsäureanhydrid verwendet werden. Weitere Beispiele sind partiell und vollständig dehydratisiertes Ricinöl, partiell acetyliertes Ricinusöl, Ringöffnungssprodukte von epoxydiertem Sojaöl mit Dimerfettsäure.

Außerdem können Fettsäureester und ihre über Epoxidation zugänglichen Derivate verwendet werden. Als Beispiel für derartige Ester seien genannt: Sojafettsäuremethylester, Leinölfettsäuremethylester, Ricinolsäuremethylester, Epoxystearinsäuremethylester, Epoxystearinsäure-2-ethylhexylester. Von den Glyceriden werden die Triglyceride bevorzugt, z.B. Rüböl, Leinöl, Sojaöl, Ricinusöl, partielle und vollständig dehydratisierte Ricinusöle, partiell acetyliertes Ricinusöl, Sojaölepoxid, Leinölepoxid, Rübölepoxid, epoxiertes Sonnenblumenöl.

Vorzugsweise werden mit Nucleophilen ringgeöffnete epoxidierte Trigylceride ungesättigter Fettsäuren eingesetzt werden. Unter Nucleophilen sind Alkohole wie z.B. Methanol, Ethanol, Ethylenglykol, Glycerin oder Trimethylolpropan, Amine wie z.B. Ethanolamin, Diethanolamin, Triethanolamin, Ethylendiamin oder Hexamethylendiamin oder Carbonsäuren wie z.B. Essigsäure, Dimerfettsäure, Maleinsäure, Phthalsäure oder ein Gemisch von Fettsäuren mit 6 bis 36 C-Atomen zu verstehen.

Die Fette und Öle (Triglyceride) können sowohl in nativer Form als auch nach thermischer und/oder oxidativer Behandlung bzw. die über Epoxidation oder über die Addition von Maleinsäureanhydrid bzw. Acrylsäure zugänglichen Derivate eingesetzt werden. Konkrete Beispiele sind: Palmöl, Erdnußöl, Rüböl, Baumwollsaatöl, Sojaöl, Ricinusöl, partiell und vollständig dehydratisierte Ricinusöl, partiell acetylierte Ricinusöle, Sonnenblumenöl, Leinöl, Standöle, geblasene Öle, epoxidiertes Sojaöl, epoxidiertes Leinöl, Rapsöl, Kokosöl, Palmkemöl und Talge.

Als Derivate können auch Amide der obengenannten Fettsäuren verwendet werden. Diese können durch Umsetzung mit primären und sekundären Aminen oder Polyaminen erhalten werden, z.B. mit Monoethanolamin, Diethanolamin, Ethylendiamin, Hexamethylendiamin, Ammoniak.

Unter "Fettalkoholen" werden Verbindungen verstanden, die eine oder mehrere Hydroxylgruppen enthalten. Die Hydroxylgruppen können mit gesättigten, ungesättigten, unverzweigten oder verzweigten Alkylresten mit mehr als 8, insbesondere mehr als 12 C-Atomen verbunden sein. Sie können neben den z.B. für die spätere Umsetzung mit Alkylenoxiden notwendigen -SH, -C = C-, -COOH, Amino-, Säureanhydrid-Gruppen oder Epoxid-Gruppen weitere Gruppen enthalten, z.B. Ether-, Ester-, Halogen-, Amid-, Amino-, Harnstoff- und Urethan-Gruppen. Konkrete Beispiele für die erfindungsgemäße Fettalkohole sind: Ricinoleylalkohol, 12-Hydroxystearylalkohol, Oleylalkohol, Erucylalkohol, Linoleylalkohol, Linolenylalkohol, Arachidylalkohol, Gadoleylalkohol, Eruylalkohol, Brassidylalkohol, Dimerdiol (= Hydrierungsprodukt des Dimerfettsäuremethylesters).

Eingesetzt werden können auch verzweigte Alkohole, sogenannte Guerbetalkohole, die sich aus der Kondensation von linearen, gesättigten oder ungesättigten Alkoholen ergeben. Beispiele hierfür sind: 2-Ethylhexanol, 2-Butyloctanol, 2-Hexyldecanol, 2-Tetradecyloctandecanol, 2-Hexadecyl-C₂₀-alkohol, außerdem auch Isostearylalkohol sowie Gemische, die sich aus der Guerbetisierung technischer Alkohole ergeben.

Als Derivate der Fettalkohole können symmetrische und unsymmetrische Ether und Ester mit Mono- oder Polycarbonsäuren eingesetzt werden. Unter Monocarbonsäuren versteht man Ameisen-, Essig-, Propion-, Butter-, Valerian-, Capron-, Önanth-, Capryl-, Pelargon-, Caprin-, Undecan-, Laurin-, Tridecan-, Myristin-, Pentadecan-, Palmitin-, Margarin-, Stearin-, Nonadecan-, Arachin-, Behen-, Lignocerin-, Cerotin- und Melissinsäure. Polycarbonsäuren sind z.B. Oxalsäure, Adipinsäure, Maleinsäure, Weinsäure und Zitronensäure. Gleichzeitig können als Carbonsäure auch die oben beschriebenen Fettsäuren eingesetzt werden, wie z.B. Ölsäureoleylester. Obige Beispiele zeigen, daß auch Ester von Fettalkoholen und Fettsäuren unter den Begriff "Fettstoffe" fallen.

Die Fettalkohole können auch verethert sein, insbesondere mit mehrwertigen Alkoholen, z.B. Alkylpolyglykoside und Dimerdiolether.

Besonders bevorzugte Fettstoffe sind Fettsäureester, insbesondere Epoxystearinsäuremethylester.
Vorzugsweise werden nur Fettstoffe als Weichmacher verwendet, insbesondere keine Polyalkylenoxide und/oder deren fettchemische Derivate. Es können aber auch sonst übliche Weichmacher zusätzlich zu den Fettstoffen eingesetzt werden.

Füllstoffe dienen einerseits dazu, Bindemittelkosten zu sparen und andererseits wird die technische Verwendbarkeit verbessert. Bei den Fugendichtstoffen können durch geschickte Wahl eines Füllstoffs oder Füllstoffgemisches Oberflächentack, Volumenschwund, Haftung sowie das mechanische Verhalten der erhärteten Masse positiv beeinflußt werden. Als Füllstoffe bzw. Pigmente kommen in Frage: Kreide, Schwerspat, Kaolin, Ruß, Gips, Aerosil, Kieselgel, Kaoline, Talkum, Graphit, Metalloxide von Aluminium, Eisen, Zink, Titan, Chrom, Kobalt, Nickel, Mangan etc., gegebenenfalls als Mischoxide, Chromate, Molybdate, Carbonate, Silikate, Aluminate, Sulfate, native Fasern, Cellulose, Holzspäne, Phthalocyanine und Quarzmehl. Bevorzugte Füllstoffe bzw. Pigmente sind: Calciumcarbonat, Bariumsulfat und Titandioxid. Die Füllstoffe und Pigmente werden in einer Menge von 0 bis 70, vorzugsweise 20 bis 60 Gew.-% zugesetzt, bezogen auf die Fugendichtungsmasse insgesamt.

Die Hilfsstoffe dienen dazu, je nach Einsatzgebiet, spezielle Effekte zu erzielen. Darunter fallen z.B. Antioxidantien, Benetzungshilfsmittel und Fungizide wie z.B. Isothiazolinonderivate, Konservierungsmittel, Entschäumer, Filmbildehilfsmittel, Geruchsstoffe, Wasser, Haftvermittler, Lösungsmittel, Farbstoffe, Flammschutzmittel, Verlaufshilfsmittel, Harze, Tackifier, Viskositätsregulatoren, Dispergierhilfsmitel (z.B. Na- oder Ammoniumsalz von Polyacrylsäure), Emulgatoren (z.B. Alkyletherphosphate und Sulfosuccinate) und Verdickungsmittel (z.B. MC, HEG). Diese Hilfsstoffe werden in einer Menge von 0,3 bis 5, vorzugsweise von 1 bis 2,5 Gew.-% zugesetzt, bezogen auf die Fugendichtungsmasse insgesamt.

Als Viskositätsregulatoren kommen in Frage: z.B. Celluloseether, gehärtetes Ricinusöl und hochdisperse Kieselsäuren sowie ionische und nichtionische Verdickungsmittel, wie z.B. Polyacrylsäure und assoziative Verdicker.

Das Wasser kann zusammen mit anderen Komponenten zugesetzt werden, z.B. in Form einer wäßrigen Dispersion des Bindemittels oder aber für sich alleine. Es ist in einer Menge von 5 bis 20, insbesondere von 10 bis 15 Gew.-% vorhanden, bezogen auf die Fugendichtungsmasse insgesamt.

Vorzugsweise ist die erfindungsgemäße Fugendichtungsmasse aus den obengenannten Komponenten folgendermaßen zusammengesetzt:
A) 10 bis 60, insbesondere 15 bis 60 Gew.-% an Acrylat/Acrylnitril-Copolymeren mit 2 bis 8 C-Atomen in der Alkoholkomponente als Bindemittel,
B) 0,2 bis 15, insbesondere 1 bis 10 Gew.-% an Fettstoffen als Weichmacher,
C) 0 bis 70, insbesondere 20 bis 60 Gew.-% an Füllstoffen und Pigmenten,
D) 0,3 bis 5, insbesondere 1 bis 2,5 Gew.-% an Hilfsstoffen und
E) 5 bis 20, insbesondere 10 bis 15 Gew.-% an Wasser.

Die Gew.-% beziehen sich auf die fertige Fugendichtungsmasse.

Die erfindungsgemäße Fugendichtungsmasse wird im allgemeinen folgendermaßen aus den Ausgangsstoffen hergestellt: Die Zugabe des erfindungsgemäßen Weichmachers zum Bindemittel kann nach, während oder vor der Polymerisation erfolgen. Die Formulierungen werden in der Regel so hergestellt, daß das Bindemittel bzw. die Bindemittel-Dispersion vorgelegt wird. Dann werden die anderen Bestandteile unter Rühren (gegebenenfalls unter erhöhter Temperatur) zugegeben. Zum Schluß wird durch Zugabe von Wasser die gewünschte Viskosität eingestellt.

Die erhaltene pastöse Masse trocknet nach der Applikation zu einem plastoelastischen oder elastischen Fugen-Dichtstoff nach DIN 52458 aus.

Die erfindungsgemäßen Fugendichtungsmassen zeichnen sich durch hervorragende mechanische Eigenschaften wie Dehnung, Gesamtverformung, Dehnspannungswert bei 100 % Dehnung und vor allem Elastizität aus.
Die Dehnung wurde nach ISO 8339 bestimmt.
Der Dehnspannungswert bei 100 % Dehnung wurde nach ISO 8339 bestimmt.
Die Elastizität wurde nach ISO 7389, Methode B bestimmt.

Bereits bei einem Zusatz von nur 0,2 Gew.-% an Fettstoff steigt die Elastizität auf 37 %, bei einem Zusatz von 1 Gew.-% steigt sie auf 80 % und bei einem Zusatz von 4 Gew.-% liegt die Elastizität schließlich bei 92 %. D.h., die Elastizität erhöht sich nicht linear, sondem sprunghaft im Bereich von 0,2 bis 1,0 Gew.-% und steigt dann nur noch langsam bei weiterem Zusatz des erfindungsgemäßen Weichmachers an. Daher eignet sich die erfindungsgemäße Fugendichtungsmasse vor allem, wenn die Substrate ein unterschiedliches elastisches Verhalten oder unterschiedliche Wärmeausdehnungskoeffizienten haben.
Der Elastizität-Modul sinkt erwartungsgemäß mit der Menge des zugesetzten Weichmachers von 0,17 N/mm² bei 0 % Zusatz des Weichmachers auf 0,13 N/mm² bei 2 Gew.-% Zusatz des erfindungsgemäßen Weichmachers und auf 0,11 N/mm² beim Zusatz von 4 Gew.-% des erfindungsgemäßen Weichmachers. Der Modul wird also nahezu linear herabgesetzt.

Durch die erfindungsgemäße Kombination von Bindemittel und Weichmacher ist es also möglich, zu hochwertigen Fugendichtungsmassen zu kommen, und zwar ausgehend von preiswerten Ausgangsstoffen.
Weitere Vorteile sind: universelle Haftung ohne Primer, Witterungs- und Alterungsstabilität, sehr geringer Volumenschwund, hohe Standfestigkeit und sehr gute Verarbeitbarkeit.

Die Erfindung wird nun anhand von Beispielen im einzelnen erläutert:

### Beispiel 1

### A) Ausgangsstoffe

a) 30 Gew.-% Butylacrylat/Acrylnitril-Copolymerisat mit ca. 6 % an Acrylnitril (Primal 3362; 62 %ige wäßrige Dispersion),
b) 0 bis 4 Gew.-% Epoxystearinsäuremethylester,
c) 60 Gew.-% Pigmente / Füllstoffe, nämlich TiO₂, Kreide und Polysiobutylen,
d) 1 bis 1,5 Gew.-% Dispergier- und Stabilisier-Hilfsmittel,
e) 1 bis 1,5 Gew.-% Verdicker, nämlich Celluloseether und Ammoniumsalze der Polyacrylsäure,
f) Rest Wasser.

### B) Herstellung der Fugendichtmassen

Bindemittel, Hilfsstoffe und Weichmacher werden vorgelegt und homogenisiert. Auf diese Mischung werden die Füllstoffe gegeben. Die einzelnen Rohstoffe werden in einem Planetenmischer innerhalb 45 Minuten intensiv gemischt, evakuiert und in handelsübliche Kunststoffkartuschen abgefüllt. Nach Lagerung in den Kartuschen wird die Fugendichtmasse anwendungstechnisch untersucht.

### C) Untersuchung der Fugendichtungsmassen

Die Fugendichtungsmassen wurden entsprechend den gültigen Normen für Fugendichtungsmassen auf eloxiertem Aluminium untersucht (siehe ISO 11600). Dazu wurden die folgenden Normen herangezogen:
Standfestigkeit: ISO 7390
Verarbeitbarkeit: ISO 9048
Haft-Dehnverhalten: ISO 8339
Rückstellvermögen: ISO 7389
Entsprechende Effekte wurden auch auf Beton erhalten.

### D) Ergebnisse

In der folgenden Tabelle 1 sind steigende Weichmacherkonzentrationen den Rückstellvermögen gegenübergestellt. Die Prüfdehnung betrug 100 %. Alle Vergleichsmuster mit Acronal 3496 X, einem Styrol-Butylacrylat-Copolymeren mit ca. 29 % an Styrol, ca. 60 % an Butylacrylat und ca. 5 % an Acrylsäure, zeigten während der Messung und bei der anschließenden Lagerung Adhäsions- und Kohäsionsrisse, so daß ein Rückstellvermögen nicht bestimmbar ist. Die Werte für die erfindungsgemäß hergestellte Zubereitung sind in der Spalte Primal 3362 aufgeführt.

**Tabelle 1**

| Weichmacherkonzentration | Acronal 3496 X % | Primal 3362 % |
|---|---|---|
| 0 % | nicht meßbar ¹⁾ | 40 |
| 1 % | nicht meßbar ¹⁾ | 82 |
| 2 % | nicht meßbar ¹⁾ | 87 |
| 3 % | nicht meßbar ¹⁾ | 89 |
| 4 % | nicht meßbar ¹⁾ | 92 |

| | | |
|---|---|---|
| ¹⁾ wegen Kohäsions- bzw. Adhäsionsfehlern. | | |

In der Tabelle 2 sind die Dehn-Spannungswerte (Bruchmodul und Bruchdehnung) aufgeführt.

**Tabelle 2**

| Weichmachergehalt | Primal 3362 | | Acronal 3496X | |
|---|---|---|---|---|
| | N/mm² | (%) | N/mm² | (%) |
| 0% | 0,17 | 175 | / | / |
| 1 % | 0,15 | 190 | / | / |
| 2% | 0,14 | 200 | / | / |
| 3% | / | / | 0,09 | 100 |
| 4 % | 0,13 | 230 | 0,08 | 120 |

Vergleicht man die erfindungsgemäße Formulierung mit dem Vergleichsbeispiel, dann beträgt das Rückstellvermögen > 70 % einerseits gegenüber einem nicht meßbaren Rückstellvermögen andererseits. Die Bruchdehnung ist doppelt so hoch; der Bruchmodul ist um bis zu 50 % erhöht.

## Patentansprüche

1. Polyacrylat-Fugendichtungsmasse, enthaltend folgende Komponenten
A) 10 bis 60 Gew.-% an Acrylat/Acrylnitril-Copolymeren mit einem Anteil an Acrylnitril im Bereich von 2 bis 15 und an Acrylat im Bereich von 85 bis 98 Gew.-% und mit 2 bis 8 C-Atomen in der Alkoholkomponente als Bindemittel,
B) 0,2 bis 15 Gew.-% an den Fettstoffen Fettsäuren, Fettalkohole und deren Derivate mit einem Molekulargewicht von größer als 100 als Weichmacher,
C) 0 bis 70 Gew.-% an Füllstoffen und Pigmenten,
D) 0,3 bis 5 Gew.-% an Hilfsstoffen und
E) 5 bis 20 Gew.-% an Wasser,
so daß eine pastöse Masse entsteht.

2. Fugendichtungsmasse nach Anspruch 1, **gekennzeichnet durch** Fettsäureester, insbesondere Epoxystearinsäuremethylester.

3. Herstellung der Fugendichtungsmasse nach mindestens einem der vorangegangenen Ansprüche, **dadurch gekennzeichnet, daß** man den Fettstoff dem Acrylat/Acrylnitrilcopolymerisat vor, bei oder nach seiner Herstellung zusetzt, insbesondere einer wäßrigen Dispersion des Acrylat/Acrylnitril-Copolymerisates.

4. Verwendung der Fugendichtungsmasse nach mindestens einem der vorangegangenen Ansprüche bei Substraten mit unterschiedlichem elastischen Verhalten oder unterschiedlichen Wärmeausdehnungskoeffizienten.

## Claims

1. A polyacrylate jointing compound containing the following components:
A) 10 to 60% by weight of acrylate/acrylonitrile copolymers containing 2 to 15% by weight of acrylonitrile and 85 to 98% by weight of acrylate and 2 to 8 carbon atoms in the alcohol component as binder,
B) 0.2 to 15% by weight of the fatty compounds fatty acids, fatty alcohols and/or derivatives thereof with a molecular weight above 100 as plasticizer,
C) 0 to 70% by weight of fillers and pigments,
D) 0.3 to 5% by weight of auxiliaries and
E) 5 to 20% by weight of water,
so that a paste-like compound is formed.

2. A jointing compound as claimed in claim 1, **characterized by** fatty acid esters, more particularly epoxystearic acid methyl ester.

3. A process for the production of the jointing compound claimed in at least one of the preceding claims, **characterized in that** the fatty compound is added to the acrylate/acrylonitrile copolymer before, during or after its production, more particularly to an aqueous dispersion of the acrylate/acrylonitrile copolymer.

4. The use of the jointing compound claimed in at least one of the preceding claims on substrates differing in their elastic behavior or their coefficient of thermal expansion.

## Revendications

1. Pâte d'étanchéité pour joints en polyacrylate renfermant les composants suivants
(A) 10 à 60 % en poids d'un copolymère d'acrylate/acrylonitrile avec une proportion d'acrylonitrile comprise dans l'intervalle de 2 à 15 et une proportion d'acrylate se situant dans l'intervalle de 85 à 98 % en poids et dont le composant alcool comporte 2 à 8 atomes de C, comme liant,
B) 0,2 à 15 % en poids de matières grasses acides gras, alcools gras et dérivés de ceux-ci possédant un poids moléculaire supérieur à 100, comme plastifiant,
C) 0 à 70 % en poids de charges et de pigments,
D) 0,3 à 5 % en poids d'adjuvants et
E) 5 à 20 % en poids d'eau,
de sorte que l'on obtient une masse pâteuse.

2. Pâte d'étanchéité pour joints selon la revendication 1, **caractérisée par** des esters d'acides gras, en particulier des esters méthyliques de l'acide époxystéarique.

3. Fabrication de la pâte d'étanchéité pour joints selon au moins une des revendications qui précèdent, **caractérisée en ce que** l'on ajoute la matière grasse au copolymère d'acrylate/acrylonitrile avant, pendant après sa fabrication, en particulier à une dispersion aqueuse du copolymère d'acrylate/acrylonitrile.

4. Utilisation de la pâte d'étanchéité pour joints selon au moins une des revendications qui précèdent sur des supports présentant un comportement élastique varié ou des coefficients de dilatation thermique variés.
